# EUROPEAN PATENT APPLICATION

(11) **EP 0 527 022 A1**
(43) Date of publication of application: **10.02.1993**
(21) Application number: 92307040.3
(22) Date of filing: 03.08.1992
(51) Int. Cl.: G05B 19/05

(54) **A controller**

(30) Priority: 07.08.1991 ZA 916215; 13.04.1992 ZA 922680
(71) Applicant: AECI LIMITED, Johannesburg 2000 Transvaal (ZA)
(72) Inventor: Heher, Anthony Douglas, Pretoria, Transvaal Province (ZA)
(74) Representative: Barlow, Roy James

(57) **Abstract**

A cell controller (1) comprises a plurality of processors (10), each of which has a number of interprocessor communication links (15). One or more of the processors (10) have interfaces (11) for connecting the processors (10) selectable data channels (13,14). A patch facility (4) enables any selected combination of interprocessor communication links (15) of the different processors (10) to be interconnected to form a multiprocessor network.

## Description

### INTRODUCTION

This invention relates to a controller and, more particularly, to a configurable controller for process control or data communication applications.

### BACKGROUND TO THE INVENTION

The topology of process measurement and control systems is generally divided into a hierarchy of three functional levels, with the lowest level comprising field instrumentation and the highest level comprising a number of centralised processors which perform operator display and global control and optimisation functions. The middle level of the hierarchy usually consists of additional processors known as cell controllers each performing control functions, but on a more localised basis than the processors at the upper level of the hierarchy.

The local control processors, or cell controllers, are usually connected to the processors at the upper level by means of a local area network (LAN), and are connected to the field instrumentation by a separate instrumentation network. The cell controllers therefore also act as bridges between a number of different data communication channels and, additionally, as concentrators and routers of data.

Numerous permutations are possible for the above general topology. For example, the upper level LAN and the instrumentation network can be combined into a single network, or different types of instrumentation networks may be used simultaneously. In addition, dual networks may be required for reasons of redundancy.

Traditionally, programmable logic controllers (PLCs) have been used in the role of cell controllers. PLCs have a limited capacity to interface to different data communication channels. For example, PLCs may usually be interfaced to a single LAN and to one particular type of instrumentation equipment, usually over a proprietary communication link. Communication over dual networks is uncommon and is costly. When PLCs are used as cell controllers, these limitations place restrictions on the topology of a process control system.

Apart from constraining the design of the process control system as outlined above, PLCs have a disadvantage in that they are single-tasking processors and thus limited in the type of local control functions which they can execute. Multi-processor PLCs may be used as cell controllers but these are unnecessarily expensive and the presence of a multi-processor backplane makes the process control system unnecessarily complex.

A further disadvantage of PLCs is that they are programmed in a low-level symbolic language, which requires specialised programming skills and which makes the development of control programs time consuming and unnecessarily expensive.

The use of PLCs as cell controllers also has several operational disadvantages namely, control programs and data must be manually loaded into the PLC memory and a PLC must be stopped before loading of the control program and the data. Altering the control program or the configuration of the process control system can therefore be complex, tedious and potentially dangerous.

European patent application No 0233373 discloses a communications adapter for connecting a LAN to a plurality of protocol controllers, each of the controllers being arranged to convert a data stream into a predetermined format. The controllers are dedicated protocol converters and are not programmable to execute local control functions necessary for process control applications.

German patent application No 3733309 discloses a configurable multi-processor computer module. The processor interconnections are dynamically reconfigurable, but the module is not interfaced directly to a LAN or data communication channel.

European patent application No 0355961 discloses an input-output controller. The controller comprises dual processors which execute embedded applications. The processor inter-connections are not reconfigurable and the controller also acts as a co-processor used in conjunction with a main control processor.

European patent application No 0187994 discloses a multiprocessor computer consisting of a master processor, a number of slave processors and a partitionable memory. Each of the slave processors is dynamically switched to a different memory partition to provide a computer for use in parallel processing applications.

European patent application No 0184657 discloses a configurable computer hardware system comprising a selectable number of processors, memories and input/output units which communicate with each other via a number of data busses on a multiprocessor backplane. The computer hardware is self-configuring and information is transferred between the system components in accordance with a predefined bus protocol.

European patent application No 0278802 discloses an interface between a LAN and an industrial process. The interface comprises a number of control and instrumentation loops and a dual-ported gateway to provide access to a redundant LAN and an industrial process. The interface comprises a number of control and instrumentation loops and a dual-ported gateway to provide access to a redundant LAN. The interface is configurable by means of a local operator console.

### OBJECT OF THE INVENTION

It is an object of this invention to provide a controller with configurable communication channels, for use in process control and data communication applications.

### SUMMARY OF THE INVENTION

According to this invention, there is provided a cell controller for controlling a process in accordance with at least one control program arranged to transform measured process variables to derive therefrom control settings for instructing transducers to regulate control process variables and thereby to urge the process to some desired state, said cell controller comprising:
a plurality of processors, each processor having a memory for storing said control program, and a plurality of interprocessor communication links for passing said measured process variables and control settings, at least one processor having an electronic interface to selectively connect the processor to a number of communication output channels;
and,
a patch facility arranged to selectively interconnect any selected combination of interprocessor communication links, to form a multiprocessor network.

Further features of the invention provide for the processors to be transputers and for the interprocessor communication links to be serial point-to-point communication links.

A still further feature of the invention provides for the patch facility to be a patchboard on which the communication links of each processor terminate, and on which the communication links may be selectively interconnected.

A yet further feature of the invention provides for the electronic interface to conform to any known networking standard such as the Ethernet, IEEE802.3 or Arcnet standards, or to any known serial communication standards such as the RS232-C or RS485 standards.

There is also provided for at least one of the processors to be connectable to a data storage means and for the data storage means to be a magnetic or an optical data disk.

There is also provided for a programming means connected to the cell controller for selectively downloading control programs from the programming means to the respective memories of the processors.

The invention extends to a method of configuring a cell controller for controlling a process in accordance with at least one control program arranged to transform measured process variables to derive therefrom control settings for instructing transducers to regulate control process variables and thereby to urge the process to some desired state, said method comprising the steps of:
selecting a plurality of processors, each processor having a memory for storing said control program, and a plurality of interprocessor communication links for passing said measured process variables and control settings;
selectively interconnecting any selected combination of interprocessor communication links by means of a patch facility, to form a multiprocessor network;
selectively connecting at least one processor to a number of communication output channels, by means of an electronic interface;
connecting a programming means to the multiprocessor network; and
selectively downloading at least one control program from the programming means to the memories of the processors in the network.

There is also provided for the step of selectively downloading control programs to the respective memories of the processors in the multiprocessor network, by connecting one of the interprocessor communication links of the multiprocessor network to the programming means, and transferring control programs from the programming means across the interprocessor communication link to the multiprocessor network and to the respective memories of the processors in the network.

### BRIEF DESCRIPTION OF THE DRAWINGS

A preferred embodiment of the invention is described below, by way of example only, and with reference to the accompanying drawings, in which:-
Figure 1 is a diagrammatic view of a configurable cell controller shown in conjunction with three data channels;
Figure 2 is a diagrammatic view of a configurable cell controller shown in conjunction with two local area networks;
Figure 3 is an alternative diagrammatic view of a configurable cell controller shown in conjunction with two dual local area networks; and
Figure 4 is a diagrammatic view of dual cell controllers shown in conjunction with two dual local area networks.

### DETAILED DESCRIPTION OF THE DRAWINGS

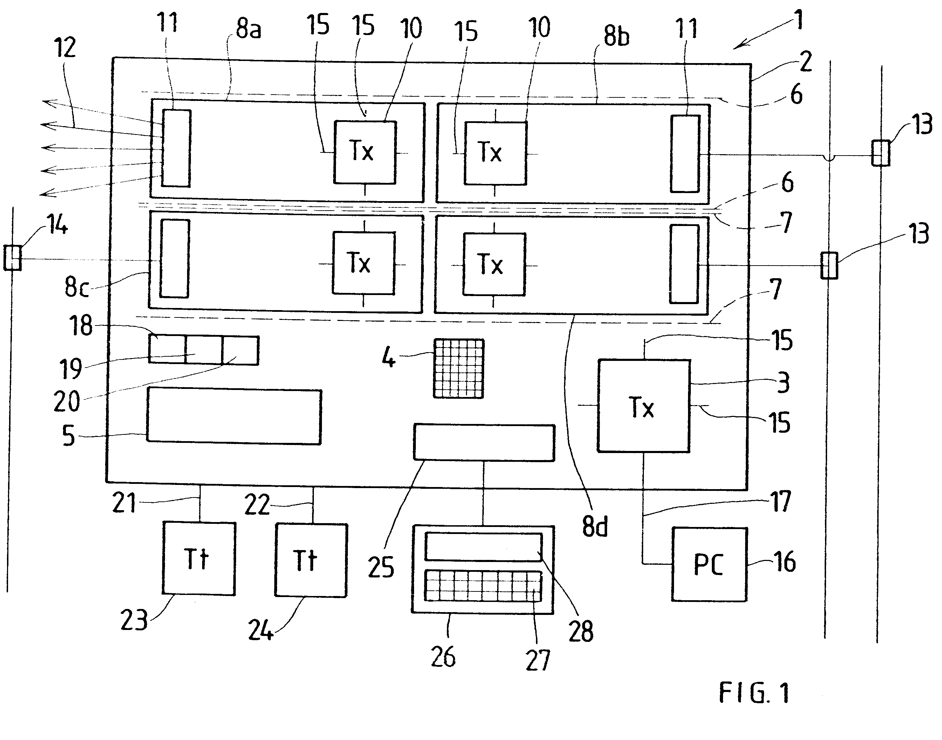

Referring to Fig. 1, a cell controller is indicated generally by numeral (1). The cell controller comprises a motherboard (2) on which are mounted a transputer (3), a patchboard (4), an external memory (5) and two size-8 transputer module rails (6), and (7).

The transputer (3) is either the 16-bit INMOS T225 or the 32-bit INMOS T425 microprocessor, each of which has 4 kbytes of internal static memory. The memory (5) on the motherboard (2) is a random-access-memory (RAM) which can range in size from a minimum of 4 Mbytes to a maximum of 16 Mbytes. The transputer (3) is connected to the memory (5) through an External Memory Interface (not shown).

Transputer modules (TRAMs) (8) may be plugged into the size-8 transputer module rails (6), and (7) so as to populate the rails (6), (7) either fully or partially. The transputer module rails (6), and (7) may receive a maximum of 16 size-1 TRAMs or a maximum of two size-8 TRAMs or any combination of TRAMs lying between these two limits. The cell controller of Fig. 1 is represented with four size-4 transputer modules (8a), (8b), (8c) and (8d).

Each TRAM (8) comprises a transputer (10), and interface circuitry (11) to enable the TRAM to be connected to one or more data channels. Each TRAM type is customised to connect to one particular type of data channel.

For example, by using four dual universal asynchronous receivers and transmitters or UARTs (not shown) in the interface circuitry (11), a TRAM may be connected at (12) to eight serial data lines conforming to the RS232-C, RS422 or RS485 standards. In a similar manner, by choice of appropriate interface circuitry, dedicated TRAMs may be constructed to interface to local area networks conforming to the Ethernet standard, at (13), or to networks conforming to the Arcnet standard, at (14). Similarly, dedicated TRAM modules (8) may be constructed to interface to any desired type of data channel.

The transputer (10) on a TRAM is of the same type as the transputer (3) on the motherboard (2) of the cell controller, that is, either a 16-bit INMOS T225 or a 32-bit INMOS T425 microprocessor.

To provide inter-transputer data transfer, the transputer (3) on the motherboard (2) and the transputers (10) on the TRAMs (8), are each equipped with four 10 Mbit/sec point-to-point interprocessor serial communication links (15). By directly interconnecting the communication links (15) of the transputers (3), and (10), a multiprocessor system can be constructed from a number of separate transputers which operate concurrently and which communicate with each other through the serial communication links (15). The interprocessor communication links (15) are connected to and terminate on, the patchboard (4). The interprocessor communication links (15) may be interconnected as desired on the patchboard (4).

When used in a particular application, a motherboard (2) is populated with dedicated TRAMs (8) of the appropriate type for interfacing to the various types of data channels used in the application. The transputer serial communication links (15) are interconnected on the patchboard (4) to provide inter-processor data transfer capacity as required. One of the serial links of the transputer (3) on the motherboard (2) is reserved for connection at (17) to a serial link of an external transputer. The external transputer can be either a transputer housed in a personal computer (16), or a transputer on the motherboard of another cell controller (not shown).

Application program development is performed on the personal computer (16) under the MS-DOS operating system from the Microsoft Corporation of the USA which is well known in the art. The application programs are downloaded to the cell controller (1) along the serial link at (17). The programs are selectively downloaded to the external memory (5) and to the internal memory of the transputer (3) on the motherboard (2). Application programs may also be downloaded from the personal computer (16) along the interconnected serial communication links (15) to the internal memories of the transputers (10) on the respective TRAMs (8).

The motherboard (2) also has transducers for measuring ambient temperature (18), and voltage supply (19) to the motherboard (2). A deadman timer circuit (20) is used to detect a malfunction of the transputer (3). These environmental and operating variables may be monitored by external processors (not shown) connectable to the cell controller (1) via one of the data channels in order to permit early detection of fault conditions when the cell controller is used in critical process control applications.

A dual UART (not shown) provides two channels (21), (22) of serial communication to the transputer (3) on the motherboard (2).

This enables two terminals (23), (24) to be directly connected to the motherboard (2) for configuration of the transputer (3) and memory (5), for performing local control functions, and for the running of diagnostic tests.

A parallel communication port (25) on the motherboard (2) enables a local control panel (26) to be connected to the cell controller (1). The local control panel (26) comprises a keyboard (27) and a liquid crystal display (28) to enable an operator to interact with and to assert local control over the cell controller (1). The operator may also configure the transputer (3) and memory (5) on the motherboard and may run diagnostic tests, from the local control panel (26).

The flexibility of configuration provided by the use of dedicated TRAMs (8) on a motherboard (2) makes the cell controller (1) suitable for use as a bridge between multiple different types of networks or data channels. The cell controller (1) may be reconfigured to connect to a different type of network by plugging in a TRAM (8) with a matching network interface (11). An interface TRAM has a low component count and therefore a new type of interface TRAM may be constructed easily and cheaply. In this type of application, the interface TRAMs (8) function primarily as drivers for the various network or data channels connected by the bridge.

A TRAM (8) may also be constructed to interface to a data bus conforming to the SCSI standard. Using this type of TRAM in the cell controller means that the controller may be interfaced to any SCSI-compatible mass storage devices such as, for example, magnetic or optical data disks.

The cell controller (1) may also be used in process control applications by programming the transputer (3) on the motherboard (2) to execute a number of control tasks. The use of the cell controller (1) as a process controller overcomes the disadvantages of using PLCs for this purpose, namely, program development for the transputer (3) is performed in a high level language, and the transputer (3) has a scheduler which enables any number of concurrent tasks to be executed simultaneously.

Constructing a multiprocessor process controller by directly interconnecting serial interprocessor communication links (15) on a transputer-based motherboard (2), with identical links (15) on TRAM data channel interfaces (8), provides a multiprocessor controller without requiring a backplane to interconnect the various processors. Eliminating the need for a backplane increases the reliability and reduces the cost of such an industrial process controller.

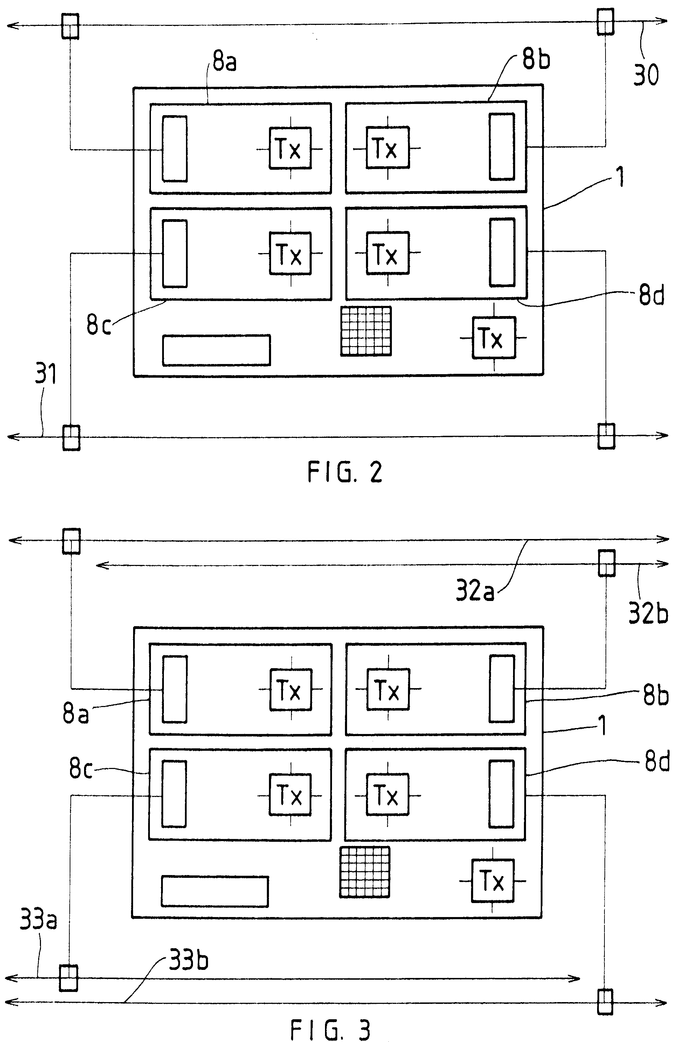

The use of a transputer based motherboard with TRAM network interfaces simplifies the implementation of redundant control systems for critical process control applications. Various configurations are possible, as indicated in Figures 2, 3 and 4 where features identical to those of Figure 1 are indicated by like numerals.

Referring to Figure 2, a single cell controller (1) is indicated in which two TRAMs (8a) and (8b) are connected in parallel to an Ethernet LAN (30), while two different TRAMs (8c) and (8d) are connected in parallel to an Arcnet LAN (31). The redundancy of this topology only provides protection against failure of any single TRAM (8a), (8b), (8c) and (8d).

Turning now to Fig. 3, a single cell controller (1) is indicated in which two TRAMs (8a) and (8b) are connected respectively to separate legs, (32a) and (32b) of a dual Ethernet LAN, while two different TRAMs (8c) and (8d) are connected respectively to separate legs (33a) and (33b) of a dual Arcnet LAN. This configuration is immune to failure of any single TRAM (8a), (8b), (8c) or (8d) and to any single leg of the dual local area networks (32) or (33).

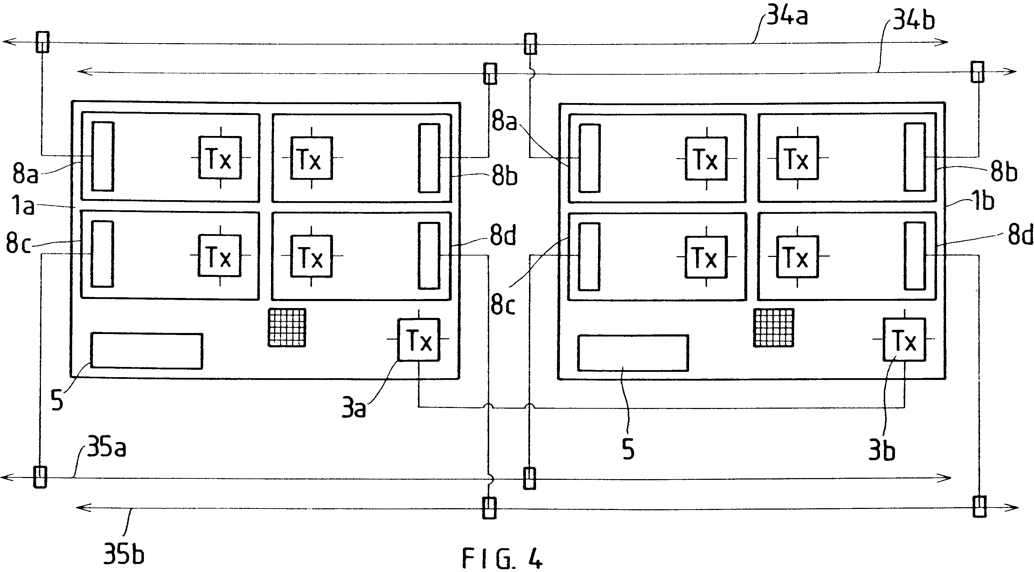

In Figure 4, two cell controllers (1a) and (1b) are indicated. In each of the cell controllers (1a) and (1b), two TRAMs (8a) and (8b) are connected respectively to separate legs (34a) and (34b) of a dual Ethernet LAN. Two different TRAMs (8c) and (8d) on each cell controller (1a) and (1b) are connected respectively to separate legs (35a) and (35b) of a dual Arcnet LAN. This configuration provides protection against failure of transputers (3a) or (3b) on the motherboard of any single cell controller (1a) or (1b), or against failure of any single TRAM (8a), (8b), (8c) or (8d). It is also tolerant of the failure of any single leg (34a), (34b), (34c) or (34d) of the dual local area networks.

The invention therefore provides an inexpensive and flexible means of implementing redundant local control in process control applications.

## Claims

1. A cell controller for controlling a process in accordance with at least one control program arranged to transform measured process variables to derive therefrom control settings for instructing transducers to regulate control process variables and thereby to urge the process to some desired state, said cell controller comprising:
a plurality of processors, each processor having a memory for storing said control program, and a plurality of interprocessor communication links for passing said measured wprocess variables and control settings, at least one processor having an electronic interface to selectively connect the processor to a number of communication output channels; and,
a patch facility arranged to selectively interconnect any selected combination of interprocessor communication links, to form a multiprocessor network.

2. A cell controller as claimed in claim 1 characterised in that the processors are transputers.

3. A cell controller as claimed in either one of claims 1 or 2, characterised in that the communication links are serial point-to-point communication links.

4. A cell controller as claimed in any one of the preceding claims characterised in that the patch facility is a patchboard on which the communication links of each processor terminate.

5. A cell controller as claimed in claim 4 characterised in that the communication links are selectively interconnectable.

6. A cell controller as claimed in any one of the preceding claims characterised in that the electronic interface conforms to one of the Ethernet, IEEE802-3 or the Arcnet networking standards.

7. A cell controller as claimed in any one of claims 1 to 5 in which the electronic interface conforms to the RS232-C or to the RS485 serial communication standards.

8. A cell controller as claimed in any one of the preceding claims characterised in that at least one of the processors is connectable to a data storage means.

9. A cell controller as claimed in claim 8 in which the data storage means is a magnetic data disk.

10. A cell controller as claimed in any one of the preceding claims characterised in that the multiprocessor network is connectable to a programming means.

11. A cell controller as claimed in claim 10 characterised in that the programming means is capable of selectively downloading control programs to the respective memories of the processors.

12. A method of configuring a cell controller for controlling a process in accordance with at least one control program arranged to transform measured process variables to derive therefrom control settings for instructing transducers to regulate control process variables and thereby to urge the process to some desired state, said method comprising the steps of:
selecting a plurality of processors, each processor having a memory for storing said control program, and a plurality of interprocessor communication links for passing said measured process variables and control settings;
selectively connecting the processors to form a multiprocessor network;
connecting a programming means to the multiprocessor network; and
selectively downloading at least one control program from the programming means to the memories of the processors in the network, characterised in that:
the processors are connected to form a multiprocessor network by interconnecting any selected combination of the interprocessor communication link by means of a patch facility, and
at least one processor is selectively connected to a number of communication output channels by means of an electronic interface.

13. A method of configuring a cell controller as claimed in claim 16 in which control programs are selectively down-loaded to the respective memories of the processors in the multiprocessor network by connecting one of the interprocessor communication links of the multiprocessor network to the programming means, and transferring control programs from the programming means across the interprocessor communication link to the multiprocessor network and to the respective memories of the processors in the network.
